# EUROPEAN PATENT SPECIFICATION

(11) **EP 4 516 378 B1**
(45) Date of publication and mention of the grant of the patent: **28.10.2026**
(21) Application number: 25152184.5
(22) Date of filing: 14.05.2020
(51) Int. Cl.: B01D 29/00, B01D 27/08, B01D 29/21, B01D 35/02, B01D 35/30, B01D 35/147

(54) **FILTRATION ELEMENT WITH GRADIENT SEAL INTERFACE**
FILTERELEMENT MIT GRADIENTENDICHTUNGSSCHNITTSTELLE
ÉLÉMENT DE FILTRATION AVEC INTERFACE DE JOINT À GRADIENT

(30) Priority: 20.05.2019 IN 201941019992
(43) Date of publication of application: 05.03.2025
(62) Document number(s) of the earlier application(s) in accordance with Art. 76 EPC: 20810101.4 / 3 972 711
(73) Proprietor: Atmus Filtration IP, Inc., North Nashville, TN 37214 (US)
(72) Inventor: Kadam, Pravin Shantinath, 416012 Kolhapur (IN); Arakeri, Sudhindra Palaxa, 585223 Shahapur (IN); Herman, Peter K., Stoughton, 53589 (US); South, Kevin C., Cookeville, 38506 (US)
(74) Representative: Marks & Clerk LLP

(56) References cited:
- WO-A1-2011/086234
- WO-A1-2018/053168
- WO-A2-2010/117799
- US-A1- 2015 209 705

## Description

### TECHNICAL FIELD

The present application relates generally to liquid filtration systems for internal combustion engine systems.

### BACKGROUND

In various applications, it is generally desirable to minimize an amount of particulate contamination in liquids used to power and lubricate an internal combustion engine. The amount of particulate contamination can be reduced by passing the liquids through a filter element or cartridge, which captures solid particles entrained within the fluid. The structure of the cartridge and the materials used in the construction of the cartridge are carefully controlled by an original equipment manufacturer (OEM) in order to prevent damage to the engine and to ensure optimal engine performance.

In some instances, a user may choose to replace the filter cartridge with a non-genuine (aftermarket) filter cartridge that is not produced by the OEM. The non-genuine filter cartridge may not adequately remove particulate contamination from the liquid which can, over a period of time, result in damage to the internal combustion engine. WO 2010/117799 A2, WO 2011/086234 A1, WO 2018/053168 A1 and US 2015/209705 A1 are relevant prior art documents.

### SUMMARY

The invention is described by the subject-matter of claims 1 to 13.

In one set of embodiments, a liquid filtration system includes a filter head, a shell housing, and a filter cartridge. The filter head includes a skirt having a ramp disposed at a first end of the skirt. The shell housing is coupled to the filter head. The filter cartridge is disposed within the shell housing. The filter cartridge includes a filter media pack and an endcap coupled to a first end of the filter media pack. The endcap includes an interface member extending from an upper surface of the endcap. The interface member includes a sealing member that is at least partially tilted at an oblique angle relative to a central axis of the endcap. The sealing member is sealingly engaged with the skirt.

In another set of embodiments, a liquid filter cartridge includes a filter media pack and an endcap. The endcap is coupled to a first end of the filter media pack. The endcap includes an interface member that extends from an upper surface of the endcap. The interface member includes a sealing member that is at least partially tilted at an oblique angle with respect to a central axis of the filter media pack.

In another set of embodiments, a method of installing a filter cartridge into a liquid filtration system includes providing a filter head, a shell housing, and a filter cartridge. The filter head includes a skirt having a ramp at a first end of the skirt. The filter cartridge includes a filter media pack and an endcap coupled to a first end of the filter media pack. The endcap includes an interface member extending from an upper surface of the endcap. The interface member includes a sealing member that is tilted at an oblique angle with respect to a central axis of the endcap. The method additionally includes joining the filter cartridge to the shell housing, and installing the shell housing onto the filter head to sealingly engage the sealing member to the skirt.

### BRIEF DESCRIPTION OF THE FIGURES

The details of one or more implementations are set forth in the accompanying drawings and the description below. Other features, aspects, and advantages of the disclosure will become apparent from the description, the drawings, and the claims, in which:
Figure 1 is a side cross-sectional view of an example liquid filtration system;
Figure 2 is a reproduction of Figure 1 at a location where a filter cartridge of the liquid filtration system engages with a filter head of the liquid filtration system;
Figure 3 is a reproduction of Figure 1 at a location where a filter cartridge of the liquid filtration system engages with a shell housing of the liquid filtration system;
Figure 4 is a perspective view of a first endcap of a filter cartridge used in the liquid filtration system of Figure 1;
Figures 5-6 are top and side views, respectively of the first endcap of Figure 4;
Figure 7 is a perspective view of a central portion of a filter head for the liquid filtration system of Figure 1;
Figure 8-10 are front, side, and rear views, respectively of the central portion of Figure 7;
Figure 11 is a perspective view of the central portion of Figure 7;
Figure 12 is a perspective cross-sectional view of the central portion of Figure 7;
Figure 13 is a perspective view of a second endcap of a filter cartridge used in the liquid filtration system of Figure 1;
Figure 14 is a side cross-sectional view of the second endcap of Figure 13;
Figure 15 is a perspective cross-sectional view of a lower portion of a shell housing used in the liquid filtration system of Figure 1;
Figure 16 is a top perspective view of another example filter cartridge;
Figure 17 is a bottom perspective view of the filter cartridge of Figure 16;
Figure 18 is a side view of a first endcap portion of the filter cartridge of Figure 16;
Figure 19 is another side view of the first endcap portion of the filter cartridge of Figure 16;
Figure 20 is a top view of the filter cartridge of Figure 16;
Figure 21 is a side cross-sectional view of a first endcap portion of the filter cartridge of Figure 16 engaged with a filter head;
Figure 22 is another cross-sectional view of the first endcap portion of the filter cartridge of Figure 16 engaged with a filter head;
Figure 23 is a perspective view of a skirt portion of a filter head;
Figure 24 is a perspective view of a central portion of a filter head for another example liquid filtration system;
Figure 25 is a side cross-sectional view of another liquid filtration system;
Figure 26 is a side cross-sectional view of a filter head for the liquid filtration system of Figure 25;
Figure 27 is a lower perspective view of the filter head of Figure 26;
Figure 28 is a side view of a first endcap of a filter element for yet another example liquid filtration system;
Figure 29 is a side cross-sectional view of still another liquid filtration system;
Figure 30 is a reproduction of Figure 29 near a sealing interface;
Figure 31 is a top perspective view of a first endcap of a filter element for the liquid filtration system of Figure 29;
Figure 32 is a side cross-sectional view of another liquid filtration system;
Figure 33 is a reproduction of Figure 32 near a sealing interface;
Figure 34 is a perspective view of a first endcap of a filter element for the liquid filtration system of Figure 32;
Figures 35-37 are side views of a central portion of a filter head for another liquid filtration system;
Figure 38 is a top cross-sectional view through a skirt of the central portion of Figures 35-37;
Figure 39 is a central portion of a filter head for another liquid filtration system;
Figure 40 is a central portion of a filter head for yet another liquid filtration system;
Figure 41 is a side view of a first endcap of a filter element for another liquid filtration system;
Figure 42 is a top view of the first endcap of Figure 41;
Figure 43 is a side view of a first endcap of a filter element for another liquid filtration system;
Figure 44 is a top view of the first endcap of Figure 43;
Figure 45 is a side cross-sectional view of another example liquid filtration system;
Figure 46 is a flow diagram of a method of installing a filter cartridge into a liquid filtration system;
Figures 47-50 are side views of a filter cartridge at different rotational positions with respect to a filter head;
Figure 51 is a side cross-sectional view of a partially installed filter cartridge;
Figure 52 is a reproduction of Figure 51 near a sealing member of the filter cartridge;
Figure 53 is a side cross-sectional view of a fully installed filter cartridge; and
Figure 54 is a reproduction of Figure 53 near a sealing member of the filter cartridge.

It will be recognized that some or all of the figures are schematic representations for purposes of illustration. The figures are provided for the purpose of illustrating one or more implementations with the explicit understanding that they will not be used to limit the scope or the meaning of the claims.

### DETAILED DESCRIPTION

Following below are more detailed descriptions of various concepts related to, and implementations of, methods, apparatuses, and systems for sealing a filter cartridge to a liquid filtration system. The various concepts introduced above and discussed in greater detail below may be implemented in any of numerous ways, as the described concepts are not limited to any particular manner of implementation. Examples of specific implementations and applications are provided primarily for illustrative purposes.

### I. Overview

Internal combustion engine systems require a clean source of fuel to power the engine. Unfiltered fuel may include dirt, metal particles, and other solid contaminants that can damage fuel injectors and other engine components. In order to protect the injectors, many internal combustion engine systems include fuel filtration systems, which filter the fuel to remove any solid materials before passing the fuel to the injectors. The filtration system may include a shell housing, a filter head, and a filter cartridge. In operation, the filtration system directs the fuel through the filter cartridge, which includes a media that captures any solid particulate entrained in the fuel. The performance of the filtration system depends, among other factors, on the structure of the filter cartridge and the materials used to construct the filter cartridge (e.g., the materials used to produce a filter media for the filter cartridge, the specifications of the filter media pack such as the flow area of the filter media pack, the pleat depth of the filter media pack, and other factors).

Over time, accumulated particulate on the filter cartridge (e.g., carbon, dust, metal particles, etc.) can increase the pressure drop across the filter cartridge (and, correspondingly, a pressure drop across a fuel delivery system for the engine). In order to reduce the pressure drop, the filter cartridge can be removed from the filtration system and replaced with a clean filter cartridge. In some instances, a user may elect to replace the filter cartridge with a non-genuine (aftermarket) filter cartridge; for example, in order to reduce maintenance costs. However, the filtration performance of the aftermarket filter cartridges can be much lower than an OEM filter cartridge. Over time, operating with the aftermarket filter cartridge may result in damage to the injectors and/or other parts of the engine, thereby leading to a reduction in engine performance.

Implementations herein relate to methods and systems including a unique sealing interface between a filter cartridge and a filter head. The sealing interface includes a sealing member (e.g., O-ring, etc.) extending in a plane that is tilted at an oblique angle relative to a central axis (e.g., longitudinal axis) of the filter cartridge. The sealing member engages a skirt on the filter head at a fixed orientation relative to the skirt to form a seal between sealing member and the skirt. In order to ensure that the sealing member is properly aligned within the skirt during installation, the sealing interface additionally includes an anti-rotation member, which engages (e.g., contacts) a leading edge of the ramped skirt to reorient the filter cartridge into alignment relative to a sealing interface on the filter head. Implementations herein also relate to a filter head that includes a plurality of vertical ribs and/or a plurality of indentations (e.g., grooves) that restrict the use of non-matching, non-genuine filter cartridges including planar radial seals.

### I. Example Liquid Filtration System

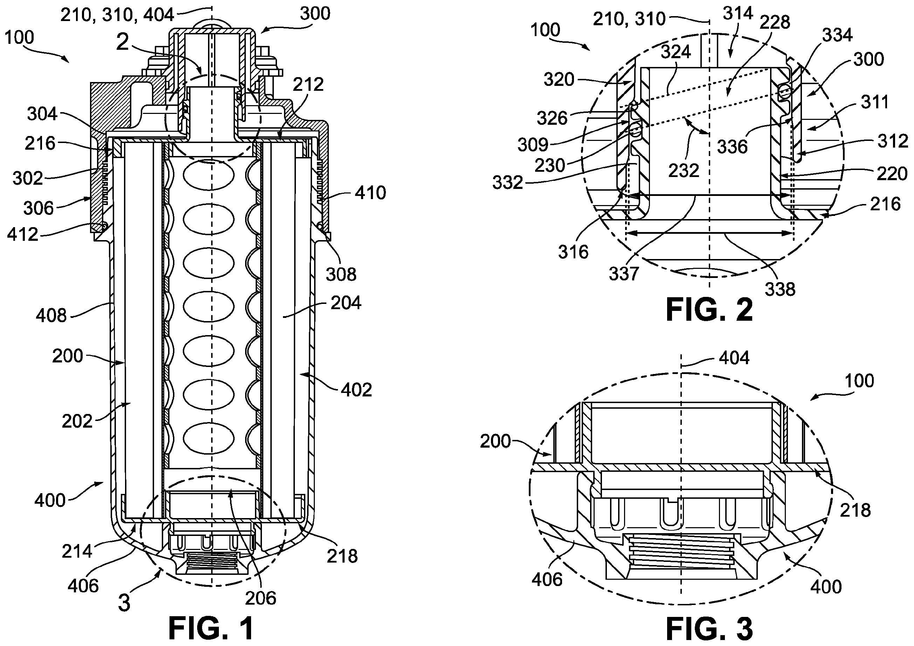

Figure 1 is a perspective view of a first example liquid filtration system, shown as system 100. The system 100 may be used to filter a fluid provided to an internal combustion engine. The fluid may be a fuel, an engine oil, a hydraulic oil, or another lubricant. In the example embodiment of Figure 1, the system 100 is a fuel filtration system for a diesel engine that uses diesel fuel to drive the combustion process. The system 100 is configured to be mounted on the diesel engine. In other embodiments, the system 100 may be configured to be mounted remotely from the engine (e.g., on a vehicle chassis, etc.).

As shown in Figure 1, the system 100 includes a filter cartridge 200, a filter head 300, and a shell housing 400. The filter cartridge 200 is disposed within a hollow portion 402 of the shell housing 400 and is coaxial with respect to a central axis 404 of the shell housing 400. The filter cartridge 200 is a cylindrically-shaped cartridge having a cylindrically-shaped filter pack 202. The filter pack 202 includes a filter media 204 configured to filter particulate matter from a fluid flowing therethrough so as to produce filtered fluid (e.g., clean fluid). The filter media 204 may include a porous material having a predetermined pore size. The filter media 204 may include a paper-based filter media, a fiber-based filter media, a foam-based filter media, or the like. The filter media 204 may be pleated or formed into another desired shape to increase a flow area through the filter pack 202, or to otherwise alter the particle removal efficiency of the filter cartridge 200. The filter cartridge 200 may be arranged as an outside-in flow filter cartridge having an outer dirty side and an inner clean side. In an alternative arrangement, the filter cartridge 200 is an inside-out filter cartridge having an inner dirty side and an outer clean side. Fluid to be filtered passes from the dirty side of the filter cartridge 200 to the clean side of the filter cartridge 200.

The filter pack 202 defines a central opening 206 extending along a central axis 210 (e.g., a longitudinal axis, up and down as shown in Figure 1) of the filter cartridge 200. The central opening 206 is sized to receive a center support tube 208 therein. The support tube 208 extends longitudinally along at least a portion of the central opening 206 from a first, upper end 212 of the filter cartridge 200 to a second, bottom end 214 of the filter cartridge 200. As shown in Figure 1, the support tube 208 is formed in the shape of a hollow cylinder. An outer wall of the support tube 208 is perforated in order to allow fluid to pass through the support tube 208.

The shell housing 400 defines a hollow portion 402 having an inner cross-sectional diameter within which the filter cartridge 200 is positioned. The shell housing 400 (e.g., a filter housing, container, or reservoir) includes a lower wall 406 and a sidewall 408 extending upwardly from the lower wall 406 in substantially perpendicular orientation relative to the lower wall 406. The shell housing 400 may be formed form a strong and rigid material. For example, the shell housing 400 may be formed from a plastic material (e.g., polypropylene, high density polyethylene, polyvinyl chloride, nylon, etc.), a metal (e.g., aluminum, stainless steel, etc.), or another suitable material. The cross-sectional shape of the shell housing 400 may be the same or similar to the cross-sectional shape of the filter cartridge 200. As shown in Figure 1, the shell housing 400 is formed in the shape of a cylinder such that the shell housing 400 has a generally circular cross-section normal to the central axis 404 of the shell housing 400. In other embodiments, the shell housing 400 may have any other suitable cross-sectional shape; for example, circular, oval, rectangular, or another suitable shape.

As shown in Figure 1, the shell housing 400 is threadably coupled to the filter head 300. The shell housing 400 includes a male threaded portion 410 disposed on an outer surface 414 of the shell housing 400 and extending downwardly (e.g., parallel to the central axis 404 of the shell housing 400) from a first, upper end 416 of the shell housing 400. The male threaded portion 410 is engaged with a female threaded portion 302 of the filter head 300. As shown in Figure 1, the female threaded portion 302 is disposed on an inner surface 304 of an outer flange 306 of the filter head 300 such that, in an installed position (as shown in Figure 1), the outer flange 306 at least partially surrounds the shell housing 400. The shell housing 400 and/or the filter head 300 may include one or more sealing mechanisms to prevent fluid from leaking into an environment surrounding the system 100. As shown in Figure 1, the shell housing 400 includes a radial sealing member 412 (e.g., an O-ring, etc.) that presses against the inner surface 304 of the outer flange 306 proximate to a lower edge 308 of the outer flange 306.

The filter cartridge 200 is structured to detachably (e.g., removably) couple to the shell housing 400 and the filter head 300. The filter cartridge 200 includes a first endcap 216 coupled to the first end 212 of the filter cartridge 200 and a second endcap 218 coupled to the second end 214 of the filter cartridge 200. The first endcap 216 and the second endcap 218 may be coupled to the filter pack 202 using glue or another suitable bonding agent (e.g., adhesive product) in order to seal the first end 212 and the second end 214 of the filter pack 202 and to prevent dirty fluid from bypassing the filter media 204 through the first end 212 and the second end 214. Figures 2 and 3 show side cross-sectional views of the system 100 at 1) an interface between the first endcap 216 and the filter head 300 (Figure 2), and 2) an interface between the second endcap 218 and the shell housing 400 (Figure 3). As shown in Figure 2, the first endcap 216 includes an interface member 220 structured to engage with the filter head 300 in order to fluidly couple the filter cartridge 200 to the filter head 300.

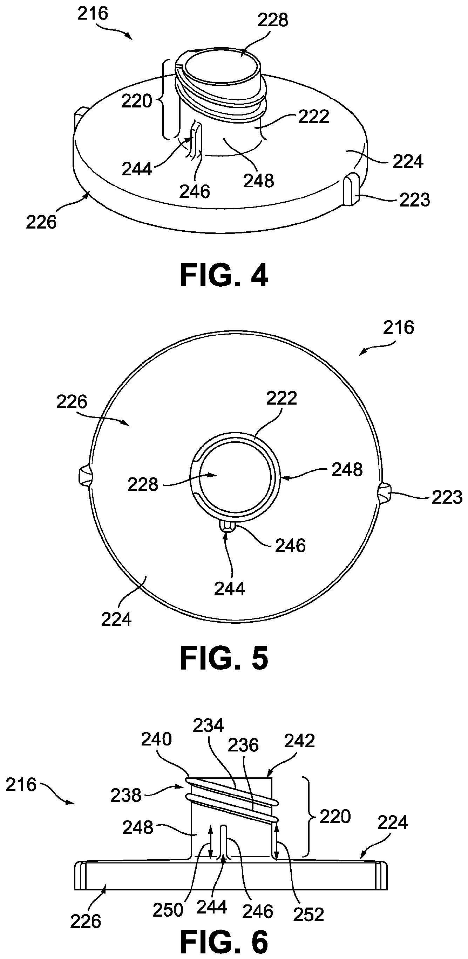

Figures 4-6 show perspective, side, and top views, respectively, of the first endcap 216 of the filter cartridge 200. The interface member 220 includes a generally cylindrically-shaped protrusion 222 extending from an upper surface 224 of a base 226 of the first endcap 216. The protrusion 222 extends upwardly (e.g., vertically upwards as shown in Figure 6) from the upper surface 224 in substantially perpendicular orientation relative to the upper surface 224. The protrusion 222 defines a central opening, shown as through-hole 228 that extends through the first endcap 216. As shown in Figure 2, the through-hole 228 is axially aligned (in coaxial arrangement) with the central opening 206 of the filter cartridge 200 and a central axis 310 of the filter head 300.

The interface member 220 engages the filter head 300 along an angled sealing interface 309. Among other benefits, the orientation of the sealing interface 309 prevents the use of non-genuine filter cartridges that rely on planar radial sealing elements (e.g., sealing elements that extend normal to the central axis 210 of the filter cartridge 200). As shown in Figure 2, the interface member 220 additionally includes a sealing member 230 (e.g., an O-ring, etc.) that is sealingly engaged with the filter head 300 in order to prevent fluid bypass between the interface member 220 and the filter head 300. The sealing member 230 is tilted at an oblique angle 232 (e.g., an angle other than 90°) with respect to the central axis 210 of the filter cartridge 200 such that a cross-section through the sealing member 230 forms an ellipse. For example, the oblique angle 232 may be approximately 75° or within a range between approximately 50°-85°. In other embodiments, the oblique angle 232 may be within different ranges.

As shown in Figure 6, the first endcap 216 of the filter cartridge 200 includes an upper extension piece 234 and a lower extension piece 236 that each extend radially outward from the cylindrically-shaped protrusion 222. The lower extension piece 236 that is parallel (or substantially parallel) to the upper extension piece 234. The lower extension piece 236 is spaced apart from the upper extension piece 234. Together, the upper extension piece 234 and the lower extension piece 236 form a groove 238 structured (e.g., sized) to receive the sealing member 230 therein. The groove 238 is sized to prevent movement of the sealing member 230 relative to first endcap 216 and the protrusion 222. As shown in Figure 6, an upper edge 240 of the upper extension piece 234 is approximately coplanar (e.g., flush) with an upper surface 242 (e.g., upper end, upper edge, etc.) of the protrusion 222.

As shown in Figure 2, rotational alignment between the interface member 220 and the filter head 300 is required in order to ensure a liquid-tight seal is formed between the interface member 220 and the filter head 300. As shown in Figures 4-6, the first endcap 216 includes an anti-rotation member 244 structured to engage with the filter head 300 in order to position the sealing member 230 (see also Figure 2) along the sealing interface 309. The anti-rotation member 244 includes a generally rectangular-shaped tab 246 disposed along an outer surface 248 of the protrusion 222. The tab 246 engages the interface member 220 (e.g., the protrusion 222), and extends radially away from the interface member 220 such that there is no gap between the anti-rotation member 244 and the interface member 220. In some embodiments, the tab 246 is a separate component from the interface member 220 and contacts (e.g., is disposed on) the interface member 220. In the embodiment shown in Figures 4-6, the tab 246 is integrally formed with at least one of the interface member 220 or the first endcap 216 as a single unitary body. The tab 246 also extends upwardly from the upper surface 242 in substantially perpendicular orientation relative to the upper surface 242. As shown in Figure 6, a height 250 of the tab 246 along the outer surface 248 of the protrusion 222 (e.g., parallel to a central axis through the first endcap 216) is approximately the same as a vertical distance 252 between the upper surface 242 and a lowermost end of the lower extension piece 236.

As shown in Figures 4-5, the first endcap 216 includes a pair of coupling members 223 that are structured to mechanically connect (e.g., couple, etc.) the first endcap 216 (and the liquid filter cartridge 200) to the shell housing 400. The coupling members 223 are configured to engage with the housing along an upper edge of the shell housing 400. In some embodiments, the coupling members 223 form a portion of a clip, latch, clasp, or another quick connect interface. As shown in Figures 4-5, each coupling member 223 is an extension piece that extends radially outward from an outer perimeter of the first endcap 216. In other embodiments, the size, shape, and arrangement of the coupling members 223 may be different.

As shown in Figure 2, the sealing member 230 is structured to press radially outwardly against a central portion 311 of the filter head 300 to form a seal between the interface member 220 and the filter head 300. The central portion 311 includes a skirt 312 that extends downwardly (e.g., vertically downward as shown in Figure 2) in substantially parallel orientation relative to the central axis 310 of the filter head 300. The skirt 312 defines a cylindrically-shaped recessed area 314 that is sized to receive the interface member 220 therein (such that the interface member 220 is at least partially surrounded by the skirt 312).

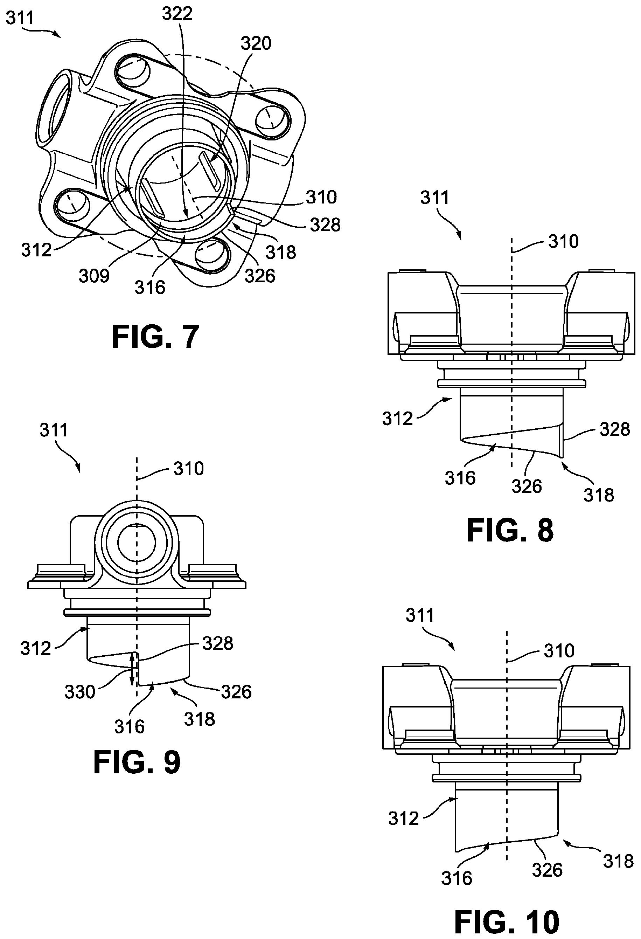

Figures 7-10 show perspective, front, side, and rear views, respectively of the central portion 311 of the filter head 300. The central portion 311 may be molded, cast, or otherwise formed from a plastic material (e.g., polypropylene, high density polyethylene, polyvinyl chloride, nylon, etc.), a metal (e.g., aluminum, stainless steel, etc.), or any other suitable material. The skirt 312 includes a ramp 316 disposed at a first, lower end 318 of the skirt 312 and a plurality of seal disruptors, shown as ribs 320 disposed proximate to a second, upper end 322 of the skirt 312. As shown in Figure 2, the sealing interface 309 is disposed between the ramp 316 and a reference plane 324 passing through a lower edge 326 of each one of the plurality of ribs 320; the reference plane 324 extending parallel to the sealing interface 309 (e.g., parallel to the sealing member 230). As shown in Figures 7-10, the ramp 316 is formed in a helical shape that extends parallel to the central axis 310 of the filter head 300. Among other benefits, the helical shape of the ramp 316 prevents a planar radial sealing element from fully engaging the skirt 312 proximate to the lower edge 326 of the skirt 312 (e.g., below the sealing interface 309).

As will be further described, the anti-rotation member 244 (see also Figures 4-6) of the first endcap 216 is structured to engage a leading edge 328 of the ramp 316 (e.g., a stepwise transition in a height of the ramp 316) to rotationally position the interface member 220 with respect to the filter head 300 (e.g., to align the sealing member 230 with the sealing interface 309 as shown in Figure 2). As shown in Figure 9, a pitch 330 (e.g., a height) of the ramp 316, along the leading edge 328 of the ramp 316, is approximately equal to the height 250 of the anti-rotation member 244 (e.g., the tab 246 shown in Figure 6) in order to fully accommodate the anti-rotation member 244 during assembly. In other embodiments, the pitch 330 of the ramp 316 is greater than the height 250 of the anti-rotation member 244.

Referring now to Figure 9, the pitch 330 of the ramp 316 is sized to prevent the anti-rotation member 244 (see also Figure 6) from engaging the lower edge 308 of the skirt 312 during installation of the shell housing 400 onto the filter head 300 (see Figure 1). In other words, the pitch 330 of the ramp 316 is sized to prevent the anti-rotation member 244 from contacting the ramp 316 at a circumferential position that is either before or after the leading edge 328 of the ramp 316. In various example embodiments, the pitch 330 of the ramp 316 is greater than a thread pitch of the male threaded portion 410 and the female threaded portion 302 (see also Figure 1). In the example system 100 of Figure 1, the pitch 330 of the ramp 316 is equal to an integer multiple of a thread pitch of the male threaded portion 410 and the female threaded portion 302 (e.g., four times the thread pitch, etc.).

As shown in Figure 2, the skirt 312 includes a first inner surface 332 and a second inner surface 334 extending upwardly from the first inner surface 332 into the recessed area 314 of the skirt 312. The second inner surface 334 forms the sealing interface 309 at which the sealing member 230 engages the skirt 312. The first inner surface 332 at least partially forms an inner surface of the ramp 316. A transition 336 between the first inner surface 332 and the second inner surface 334 is oriented parallel to the sealing member 230. Alternatively, the transition 336 between the first inner surface 332 and the second inner surface 334 can be tilted at an angle with respect to the sealing member 230 (e.g., can be oriented in a slightly non-parallel angle, etc.) such that the seal engagement occurs locally/gradually vs. abruptly over the full seal perimeter, giving a "softer" more user-friendly installation feel, lacking an abrupt step-change in torque required. In the example system 100 of Figure 2, an inner diameter 337 of the second inner surface 334 is less than an inner diameter 338 of the first inner surface 332. Among other benefits, the difference in (inner) diameter 337, 338 between the first inner surface 332 and the second inner surface 334 prevents damage to the sealing member 230 during assembly (e.g., prevents the sealing member 230 from rubbing against the first inner surface 332 as the sealing member 230 is pressed into the recessed area 314, past the first inner surface 332). The difference in (inner) diameter also prevents non-genuine filter cartridges without the proper structure from sealing against the ramped portion of the skirt 312.

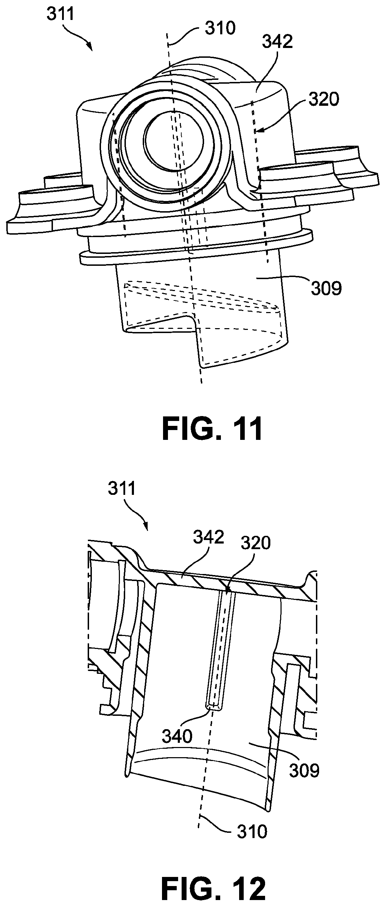

The plurality of ribs 320 (or, alternatively, grooves) are structured to prevent an improper filter cartridge from sealing along a portion of the recessed area 314 that is above the sealing interface 309. In the event that a non-matching, non-genuine filter cartridge without the proper arrangement is installed into the filter head 300, the ribs 320 will press against the seal to displace the seal and allow fluid to bypass between the clean and dirty sides of the filter cartridge. In an alternative example, the ribs 320 could be replaced by indentations or grooves. The indentations or grooves would prevent proper sealing engagement between the non-matching, non-genuine filter cartridge and the filter head 300, despite being fully installed (e.g., axially) into the filter head 300. Figures 11-12 show perspective and cross-sectional views, respectively of the central portion 311 of the filter head 300. Each one of the plurality of ribs 320 includes a raised thin section of material extending upwardly (e.g., vertically upwardly as shown in Figures 11-12) from an upper edge 340 of the sealing interface 309, between the upper edge 340 and an upper wall 342 of the central portion 311. The ribs 320 are oriented parallel to the central axis 310 of the filter head 300. In other embodiments, the shape, number, and orientation of the ribs 320 may be different. In various example embodiments, the ribs 320 are integrally formed with the central portion 311 of the filter head 300 as a single unitary structure.

Referring now to Figure 3, the second endcap 218 of the filter cartridge 200 is detachably (e.g., removably) coupled to a lower wall 406 of the shell housing 400 via interlocking members disposed on the second endcap 218 and the lower wall 406. The interlocking members prevent axial movement of the filter cartridge 200 relative to the shell housing 400, while allowing the filter cartridge 200 to rotate under torsional loading relative to the shell housing 400 (e.g., relative to the central axis 404 of the shell housing 400).

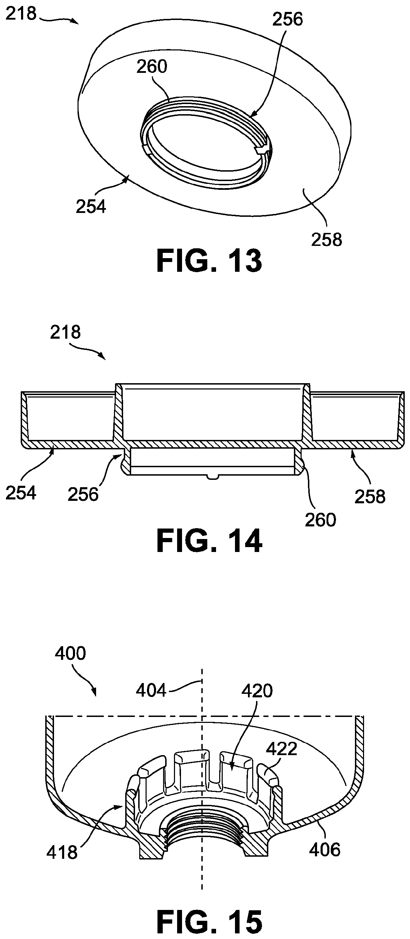

Figures 13-14 show perspective and side views, respectively of the second endcap 218. Similar to the first endcap 216 of Figures 4-6, the second endcap 218 of Figures 13-14 includes a base 254 that is structured to couple to the filter pack 202 (at a second end 214 of the filter pack 202 as shown in Figure 1). The second endcap 218 includes a male interlocking member 256 extending from a lower surface 258 of the second endcap 218 in substantially perpendicular orientation relative to the lower surface 258. The male interlocking member 256 includes a lip 260 (e.g., protrusion, ledge, etc.) extending circumferentially along an outer perimeter of the male interlocking member 256. As shown in Figure 3, the male interlocking member 256 is structured to engage with a female interlocking member 418 disposed on the lower wall 406 of the shell housing 400.

Figure 15 shows a perspective cross-sectional view of the shell housing 400 near the lower wall 406. The female interlocking member 418 includes a plurality of fingers 420 that extend upwardly (e.g., vertically upwardly as shown in Figure 15) from the lower wall 406 in substantially perpendicular orientation relative to the lower wall 406. Each one of the fingers 420 includes an inner latch 422 structured to engage with the lip 260 on the male interlocking member 256 (see also Figures 13-14). The inner latch 422 retains the lip 260, thereby securing the filter cartridge 200 in position (e.g., axially) relative to the shell housing 400. In the example embodiment of Figure 15, the fingers 420 are structured to deform (e.g., bend, flex) outwardly (e.g., radially outward relative to the central axis 404 of the shell housing 400) in response to an applied force from the male interlocking member 256. In this way, the female interlocking member 418 snaps (e.g., clicks, hooks, etc.) over the lip 260 on the male interlocking member 256 to secure the filter cartridge 200 in position. The frictional force between the male interlocking member 256 and the female interlocking member 418 prevents rotation of the filter cartridge 200 relative to the shell housing 400 in the absence of an applied torque between the filter cartridge 200 and the shell housing 400. Among other benefits, as shown in Figure 2, the male interlocking member 256 and the female interlocking member 418 align the central axis 210 of the filter cartridge 200 with the central axis 404 of the shell housing 400 and position the filter cartridge 200 relative to the filter head 300 during assembly.

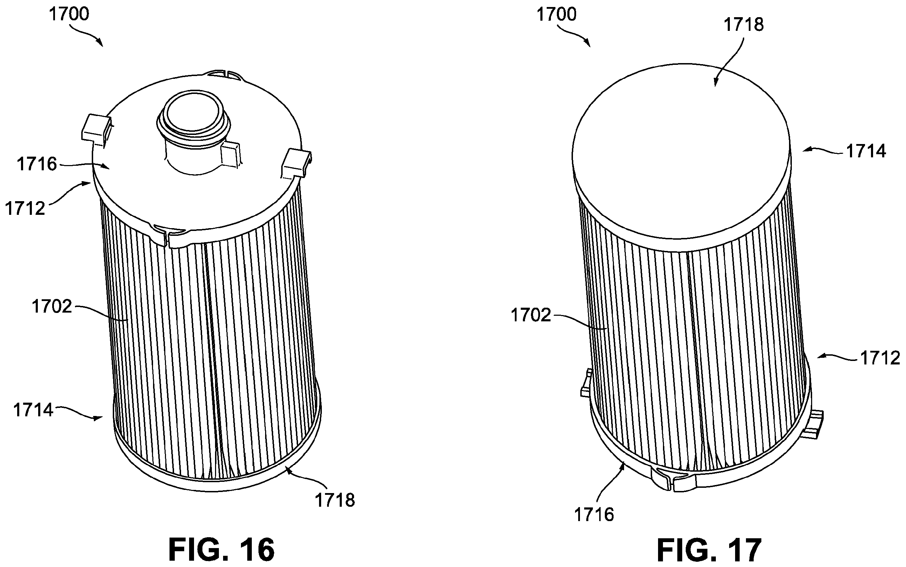

The combination of features shown in the example system 100 of Figures 1-15 should not be considered limiting, and a variety of alternatives are possible without departing from the inventive concepts disclosed herein. For example, Figures 16-20 show another example filter cartridge 1700 that is similar to the filter cartridge 200 of Figure 1. The filter cartridge 1700 includes a first endcap 1716 coupled to a first end 1712 of the filter pack 1702 and a second endcap 1718 coupled to a second end 1714 of the filter pack 1702. The second endcap 1718 is a cup shaped plate that defines a substantially planar surface that covers the second end 1714.

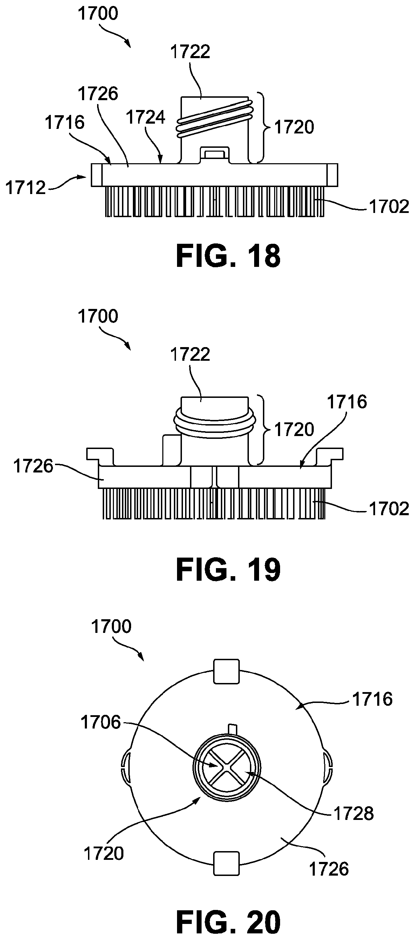

As shown in Figures 18-20, the first endcap 1716 includes an interface member 1720 that is configured to sealingly engage the filter cartridge 1700 to a filter head. The interface member 1720 includes a generally cylindrically-shaped protrusion 1722 extending from an upper surface 1724 of a base 1726 of the first endcap 1716. The protrusion 1722 extends upwardly (e.g., vertically upwards as shown in Figure 18) from the upper surface 1724 in substantially perpendicular orientation relative to the upper surface 1724. The protrusion 1722 defines a central opening, shown as through-hole 1728 (see Figure 20) that extends through the first endcap 1716. As shown in Figure 20, the through-hole 1728 is axially aligned (in coaxial arrangement) with the central opening 1706 of the filter cartridge 1700.

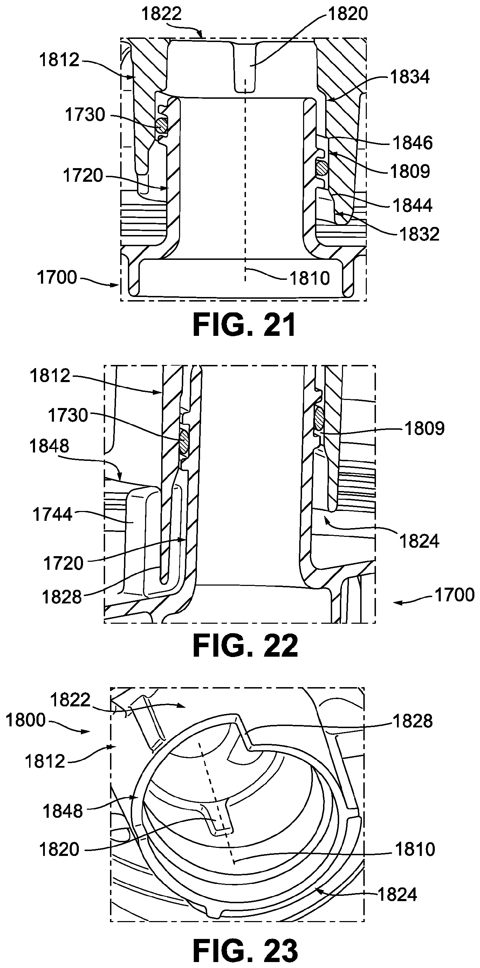

Figures 21-23 show the interface member 1720 engaged with a skirt 1812 of a filter head 1800. In particular, the interface member 1720 includes a sealing member 1730 that is sealingly engaged with the skirt 1812 along an angled sealing interface 1809. As shown in Figures 21 and 23, the skirt 1812 includes a plurality of ribs 1820 disposed proximate to an upper end 1822 of the skirt 1812. Each of the ribs 1820 extends downwardly from the upper end 1822 in substantially parallel orientation relative to a central axis 1810 of the skirt 1812. A height of each of the ribs 1820 is approximately uniform along the circumference of the skirt 1812. In other embodiments, the height of each of the ribs 1820 may be different (e.g., a lower end of each of the ribs 1820 may extend to the upper edge of the angled sealing interface 1809). As shown in Figure 21, the angled sealing interface 1809 separates a lower inner surface 1832 of the skirt 1812 from an upper inner surface 1834. The lower inner surface 1832 is spaced apart from the upper end 1822 by the upper inner surface 1834 and the angled sealing interface 1809. As shown in Figure 21, an inner diameter of the skirt decreases at a first transition 1844 between the lower inner surface 1832 and the angled sealing interface 1809, and also at a second transition 1846 between the angled sealing interface 1809 and the upper inner surface 1834. As shown in Figure 21, the change in diameter at the first transition 1844 is gradual to facilitate installation of the filter cartridge 1700 (e.g., interface member 1720) into the skirt 1812.

As shown in Figure 22, the interface member 1720 also includes an anti-rotation member (e.g., tab) 1744, which may be the same as or similar to the anti-rotation member 244 described with reference to Figure 6. As shown in Figures 22-23, the anti-rotation member 1744 is sized to engage with a slot 1848 that is disposed in a lower end 1824 of the skirt 1812. Among other benefits, incorporating the slot 1848 into the skirt 1812 helps facilitate alignment between the filter cartridge 200 and the filter head 1800 during installation. As shown in Figure 22, the anti-rotation member 1744 engages with trailing edge 1828 of the slot 1848 during installation to fully align the interface member 1720 with the angled sealing interface 1809 (and to substantially prevent further rotation of the filter cartridge 1700).

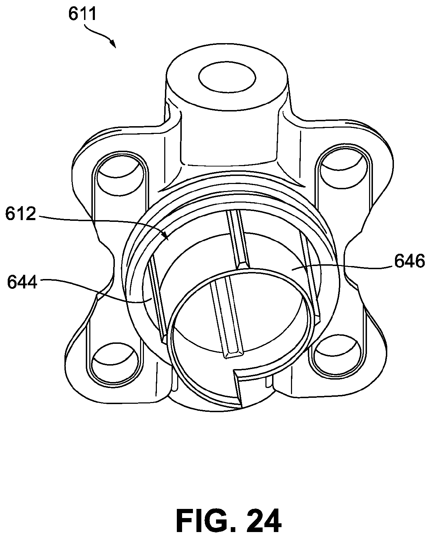

Figure 24 shows a central portion 611 of another example filter head. The central portion 611 includes a skirt 612, which may be the same or similar to the skirt 312 described with reference to Figures 7-12. Additionally, the skirt 612 of Figure 24 includes a plurality of seal disruptors, shown as outer ribs 644, disposed on an outer surface 646 of the skirt 612 and arranged in substantially parallel orientation relative to a central axis of the skirt 612. The outer ribs 644 extend along a length of the skirt 612 from an upper end of the skirt 612 to a lower end of the skirt 612. Among other benefits, the outer ribs 644 prevent a non-matching, non-genuine filter element from sealing against the outer surface 646 (e.g., the outer ribs 644 prevent a radial sealing member of a non-genuine filter element from fully contacting the outer surface 646). Alternatively, the ribs 644 could be replaced by indentations or grooves to prevent non-matching, non-genuine filter element from sealing against the outer surface 646.

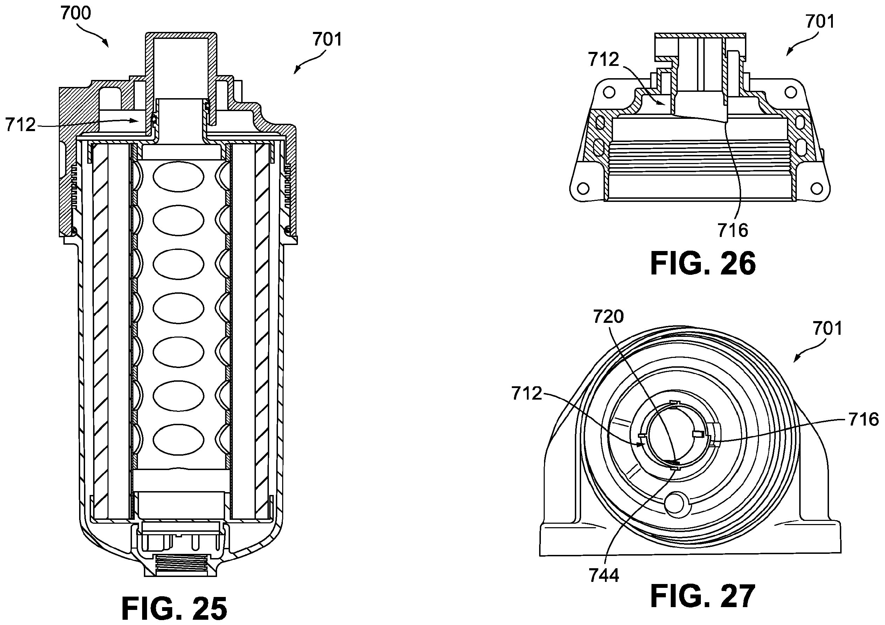

Figures 25-27 show a filter head 701 for another liquid filtration system 700. The filter head 701 includes a skirt 712 that is integrally formed with the filter head 701 as a single unitary structure. The sealing surfaces and ribs (e.g., ramp 716, inner ribs 720, outer ribs 744, etc.) are also integrally formed with the filter head 701 as opposed to including them as part of a separate cap or adapter.

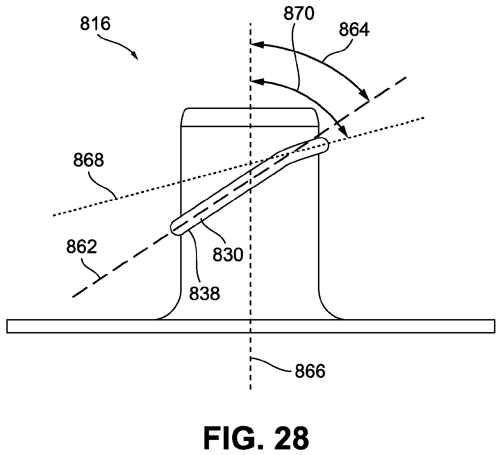

Figure 28 shows another example first endcap 816 of a filter cartridge (e.g., the filter cartridge 200 of Figure 1). The first endcap 816 is structured to support a sealing member 830 in a non-planar orientation. The first endcap 816 includes a groove 838. A first portion of the groove 838 is disposed along a first reference plane 862. The first reference plane 862 forms a first angle 864 with respect to a central axis 866 through the first endcap 816. A second portion of the groove 838 is disposed along a second reference plane 868. The second reference plane 868 forms a second angle 870 with respect to the central axis 866. In the embodiment of Figure 28, the second angle 870 is greater than the first angle 864. In other embodiments, the geometry of the groove 838 may be different and could include non-planar shapes such as parabolic hyperboloid seal shapes or simple curved shapes. In embodiments where the groove 838 is non-planar (e.g., tilted at multiple angles, curved, etc.), the sealing member is at least partially tiled at an oblique angle with respect to a central axis of the filter cartridge.

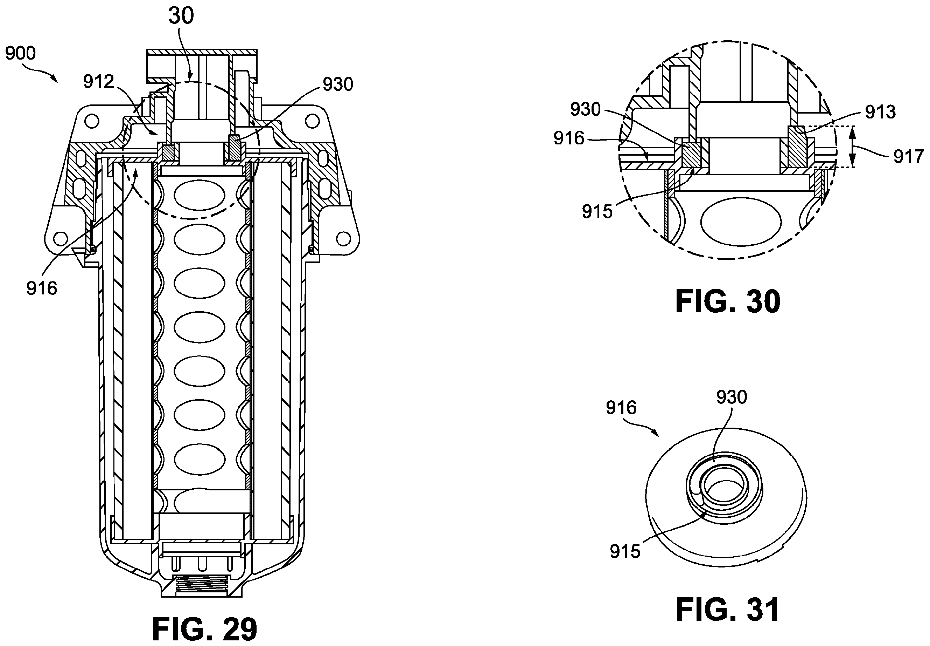

In some embodiments, the filter cartridge may be structured to engage with the filter head along an axial sealing interface or a combination of an axial sealing interface and a radial sealing interface. Referring to Figures 29-31, a system 900 is shown to include a sealing member 930 that is sealingly engaged to a skirt 912 along a lower edge 913 of the skirt 912. The sealing member 930 forms an axial seal (e.g., an end-to-end sealing arrangement) with the skirt 912. As shown in Figure 31, a first endcap 916 of a filter cartridge for the system 900 includes an axial groove 915 structured (e.g., sized) to receive the sealing member 930 therein. The sealing member 930 is an irregular shape having non-uniform cross-sections normal to a central axis of the first endcap 916. As shown in Figure 30, a height 917 of the sealing member 930, parallel to the central axis of the first endcap 916, varies with position along the axial groove 915.

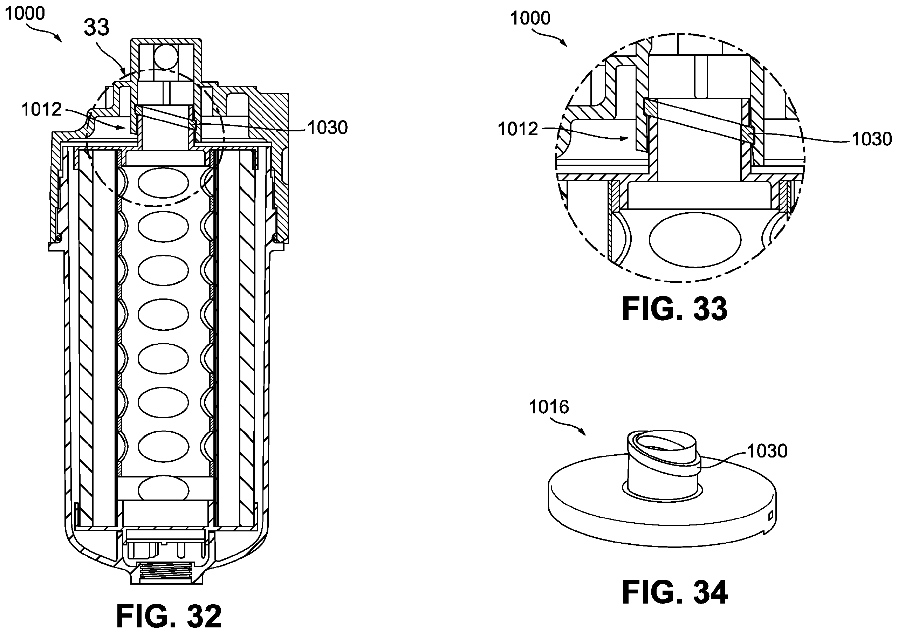

Other types of sealing members are also contemplated. For example, Figures 32-34 show a system 1000 that includes a radial sealing member 1030 structured to sealingly engage a filter cartridge to a skirt 1012 along an inner surface of the skirt 1012 (e.g., in a radial sealing configuration). As shown in Figures 33-34, the sealing member 1030 has a substantially rectangular cross-section. The sealing member 1030 may be over molded onto a first endcap 1016 of the filter cartridge, or may be a simple cut-gasket installed in rectangular elliptical groove. In other embodiments, the geometry and/or arrangement of the sealing member 1030 may be different.

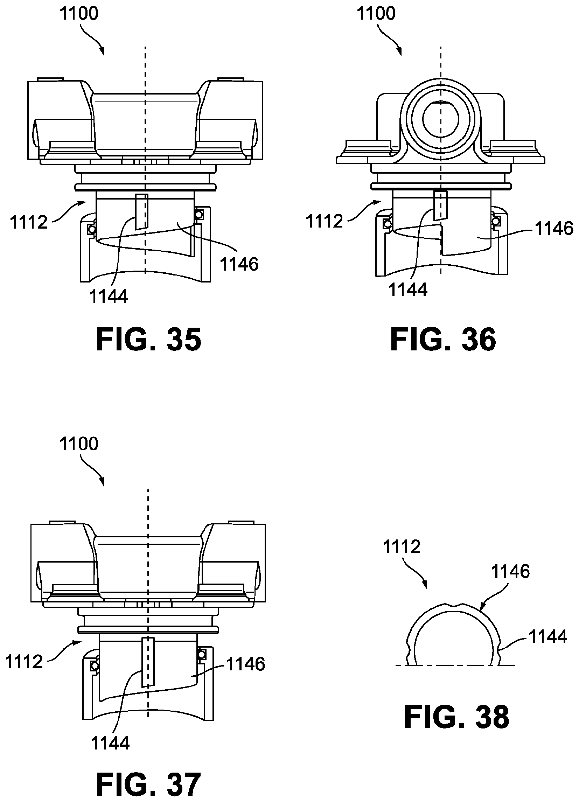

Figures 35-37 show side views another example filter head 1101 where a sealing member is structured to seal against an outer surface 1146 of skirt 1112 rather than an inner surface. As shown, the filter head 1101 includes a plurality of indentations 1144 disposed on an outer surface 1146 of the skirt 1112 and arranged in substantially parallel orientation relative to a central axis of the skirt 1112. The indentations 1144 extend along a length of the skirt 1112 from an upper end of the skirt 1112 to a lower end of the skirt 1112. Figure 38 shows a top view at a cross-section through the skirt 1112. The indentations 1144 may be cut or otherwise formed into the outer surface 1146. Among other benefits, the indentations 1144 prevent a non-matching, non-genuine filter element from sealing against the outer surface 1146 (e.g., the indentations 1144 prevent a radial sealing member of a non-genuine filter element from fully contacting the outer surface 1146).

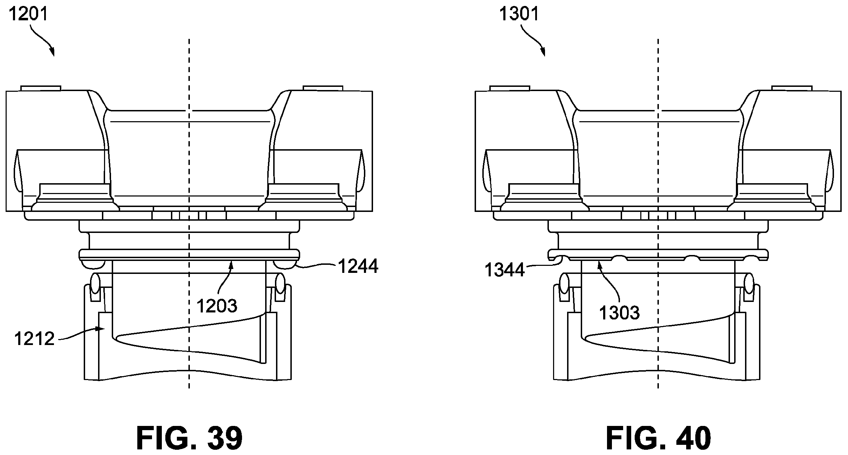

Similar features may be formed into the filter head to prevent a non-matching, non-genuine filter element from forming an axial seal with the filter head (e.g., to prevent an axial sealing member from fully contacting a surface of the filter head). Figures 39 shows a side view of an example filter head 1201 that includes a plurality of bumps 1244 disposed on a lower surface 1203 of the filter head 1201 just above a skirt 1212 of the filter head 1201. Figure 40 shows a side view of an example filter head 1301 that includes a plurality of indentations 1344 on a lower surface 1303 of the filter head 1301.

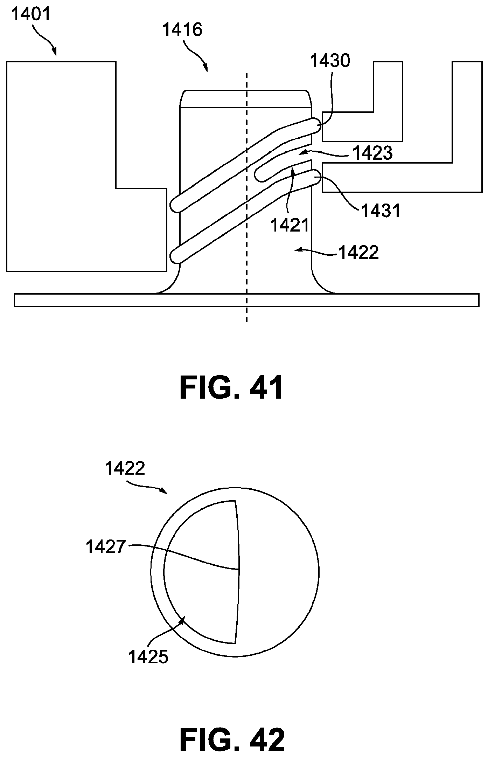

In some embodiments, the first endcap of the fuel filter element may be modified to function as both an inlet and an outlet to the hollow portion of the shell housing. Figures 41 and 42 show side and top views, respectively, of a first endcap 1416 of a filter element. The first endcap 1416 includes a cylindrically-shaped protrusion 1422. The protrusion 1422 includes an upper sealing member 1430 and a lower sealing member 1431. The lower sealing member 1431 is spaced apart from the upper sealing member 1430 vertically, along a central axis of the first endcap 1416. The protrusion 1422 additionally includes an opening 1421 extending through an outer wall of the protrusion 1422 along an approximately 180° portion of the outer wall. As shown in Figure 42, the protrusion 1422 additionally includes a partition 1427 defining two passageways through the protrusion 1422 (e.g., an inlet passageway that directs fuel into the hollow portion of the shell and an outlet passageway that directs fuel out from the hollow portion). As shown in Figure 41, a filter head 1401 is structured to engage with the protrusion 1422 to direct flow to at one of the passageways (e.g., passageway 1423) and to receive flow from the remaining passageway (e.g., passageway 1425).

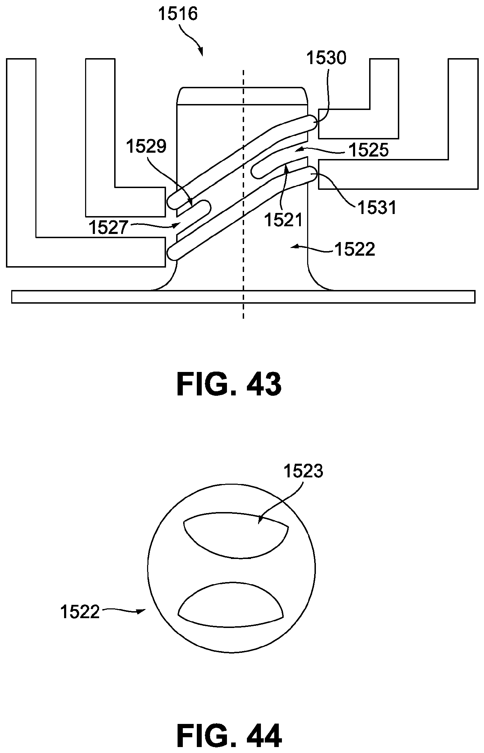

Figures 43 and 44 show side and top views, respectively, of another example first endcap 1516. Like the first endcap 1416 of Figures 41-42, the first endcap 1516 of Figures 43-44 includes a protrusion 1522 including an upper sealing member 1530 and a lower sealing member 1531 spaced vertically apart from the upper sealing member 1530. In the embodiment of Figures 43-44, the protrusion 1522 defines three passageways, a first passageway 1523 extending through an upper surface of the protrusion 1522, a second passageway 1525 extending through a first opening 1521, and a third passageway 1527 extending through a second opening 1529 on an opposite side of the protrusion 1522 as the first opening 1521. In some implementations, the second passageway 1525 and the third passageway 1527 may be fluidly coupled. In other embodiments, the number and/or geometry of the fluid passageways may be different.

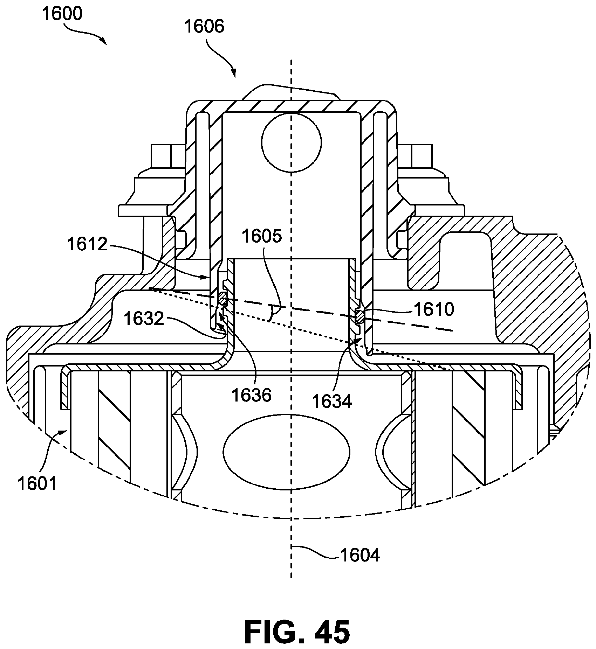

Figure 45 shows a system 1600 in which a transition 1636 between a first inner surface 1632 of a skirt 1612 (below the transition 1636) and a second inner surface 1634 of the skirt 1612 (above the transition 1636) is tilted at an angle 1605 with respect to a sealing member 1610 of the filter cartridge. Among other benefits, tilting the transition 1636 relative to the sealing member 1610 ensures that engagement between the sealing member 1610 and a sealing interface of the skirt 1612 occurs gradually over a perimeter of the sealing interface (rather than abruptly all along the perimeter which would require a much larger force to overcome). In the example embodiment of Figure 45, the angle 1605 between the transition 1636 and the sealing member 1610 is approximately 10°. In other embodiments, the oblique angle 1602 may be less than or equal to 10° relative to the sealing member 1610 or any other suitable angle to avoid an abrupt change in the compressive force acting between the skirt 1612 and the sealing member 1610 as the filter cartridge 1601 is inserted into the skirt 1612.

### I. Example Manufacturing Method for the Example Axial Flow Element

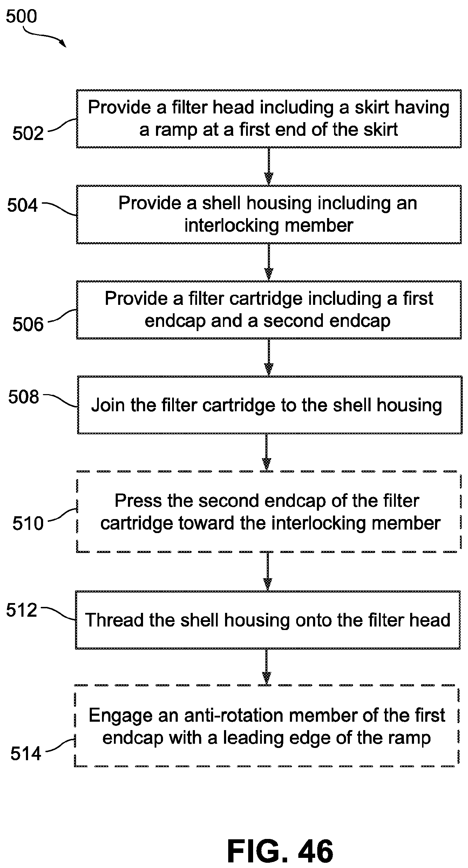

Figure 46 is a flow diagram of a method 500 of installing a filter cartridge in a liquid filtration system. The liquid filtration system may be the same or similar to the system 100 described in detail with reference to Figure 1. At 502, a filter head 300 is provided. Block 502 may include mounting the filter head 300 to an engine (e.g., an engine block) or to another location along a vehicle chassis (e.g., a frame rail, etc.). Block 502 may additionally include connecting fluid transfer lines to inlet and outlet ports on the central portion 311 of the filter head 300 in order to fluidly couple the filter head 300 to a fuel system.

At 504-506, a shell housing 400 and a filter cartridge 200 are provided. At 508, the filter cartridge 200 is joined to the shell housing 400. Block 508 may additionally include aligning a central axis 210 of the filter cartridge 200 with a central axis 404 of the shell housing 400 and placing the filter cartridge 200 into a hollow portion 402 of the shell housing 400. Block 508 may further include coupling the filter cartridge 200 to the shell housing 400 (e.g., so that the filter cartridge 200 may rotate relative to the shell housing 400); for example, by connecting male interlocking member 256 and the female interlocking member 418 disposed on the filter cartridge 200 and the shell housing 400. The male interlocking member 256 and the female interlocking member 418 may be connected by pressing a second endcap 218 of the filter cartridge 200 (e.g., a male interlocking member 256 of the second endcap 218) toward a female interlocking member 418 on the shell housing 400 (at 510). Block 510 may additionally include expanding the female interlocking member 418 to snap, clip, or otherwise fasten the male interlocking member 256 to the female interlocking member 418.

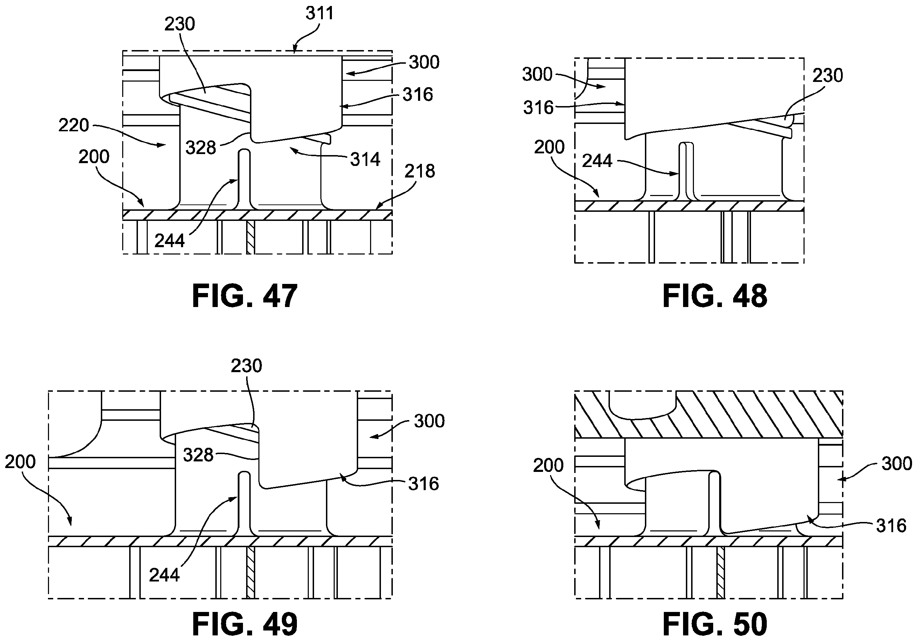

At 512, the shell housing 400 is threaded onto the filter head 300. Block 512 may additionally include aligning the central axis 404 of the shell housing 400 with a central axis 310 of the filter head 300 such that the filter cartridge 200 and the shell housing 400 are in coaxial arrangement with respect to the filter head 300. Figures 47-50 show side views of an interface between the filter cartridge 200 and the filter head 300 during block 512 (e.g., the threading operation). As shown in Figure 47, the interface member 220 of the second endcap 218 is inserted into the recessed area 314 in the central portion 311 of the filter head 300. The shell housing 400 (not shown) is rotated relative to the filter head 300 (e.g., in a clockwise direction relative to the filter head 300) to draw the interface member 220 further into the recessed area 314.

Block 512 may further include engaging an anti-rotation member 244 disposed on the filter cartridge 200 with the leading edge 328 of the ramp 316 on the filter head 300. As shown in Figures 47-49, the filter cartridge 200 rotates relative to the filter head 300 under the frictional force between the male interlocking member 256 and the female interlocking member 418 of the filter cartridge 200 and the shell housing 400. As a result of the difference in pitch 330 between the ramp 316 and the threads, the filter cartridge 200 continues to rotate with the shell housing 400 until the anti-rotation member 244 is brought into contact with the leading edge 328 of the ramp 316 (see Figure 49). The engagement between the anti-rotation member 244 and the ramp 316 ensures that the sealing member 230 will remained aligned with the sealing interface 309 of the filter head 300 as the shell housing 400 is tightened onto the filter head 300.

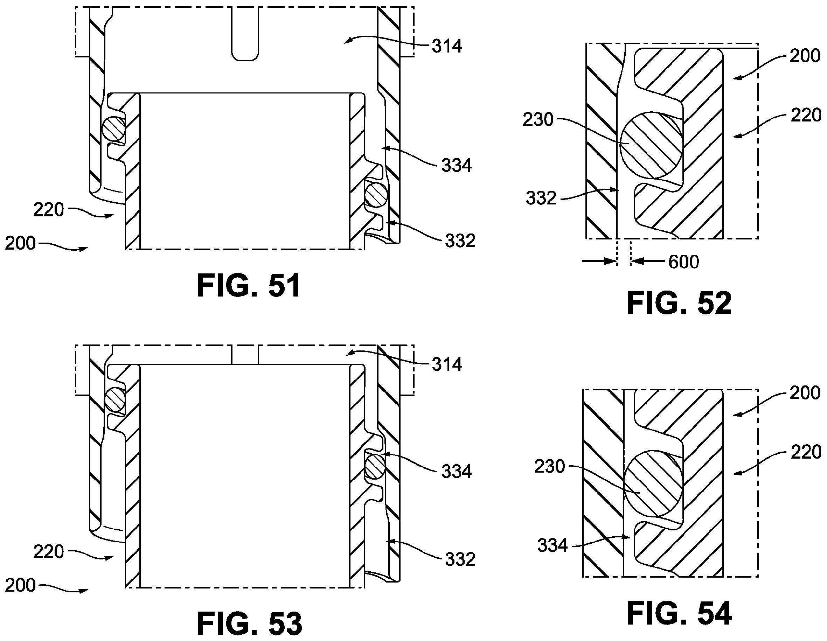

As shown in Figures 51-54, block 512 may additionally include pressing the interface member 220 of the filter cartridge 200 into the recessed area 314, from the first inner surface 332 of the recessed area 314 to the second inner surface 334 of the recessed area 314. As shown in Figures 51-52, during a first part of the assembly process, a radial gap 600 is formed between the sealing member 230 and the first inner surface 332 of the recessed area 314. In a fully installed position, as shown in Figures 53-54, the sealing member 230 presses against the second inner surface 334, thereby sealing the filter cartridge 200 to the filter head 300. In other example embodiments, the method may include additional, fewer, and/or different operations.

## Claims

1. A liquid filter cartridge (200), comprising:
a filter media pack (202); and
an endcap (216) coupled to a first end (212) of the filter media pack, the endcap comprising an interface member (220) extending from an upper surface (242) of the endcap, the interface member comprising a sealing member (230) that is at least partially tilted at an oblique angle (232) with respect to a central axis (210) of the filter media pack, a first portion of the sealing member is tilted at a first angle (864), and a second portion of the sealing member is tilted at a second angle (870) that is different from the first angle.

2. The liquid filter cartridge of Claim 1, wherein the endcap includes an anti-rotation member (244) engaging the interface member and extending radially away from the interface member.

3. The liquid filtration system of Claim 2, wherein the anti-rotation member is a rectangular-shaped tab (246) extending radially outward from the interface member and upwardly from the upper surface in a substantially perpendicular orientation relative to the upper surface.

4. The liquid filter cartridge of Claim 1, wherein the interface member includes an opening (1421) extending radially therethrough.

5. The liquid filter cartridge of Claim 4, wherein the interface member includes an upper sealing member (1430) and a lower sealing member (1431) spaced vertically apart from one another and wherein the interface member further includes a partition (1427) defining two passageways (1423, 1425) through the interface member.

6. The liquid filter cartridge of claim 4, wherein the interface member includes an upper sealing member (1430) and a lower sealing member (1431) spaced vertically apart from one another, wherein the opening is a first opening (1521), and wherein the interface member defines a first passageway (1523) extending through an upper surface of the interface member, a second passageway (1525) extending through the first opening, and a third passageway (1527) extending through a second opening (1529) on an opposite side of the interface member as the first opening.

7. The liquid filter cartridge of Claim 1, wherein the interface member comprises a cylindrically-shaped protrusion (1722), the cylindrically-shaped protrusion defining a central opening (1728) that extends through the endcap.

8. The liquid filter cartridge of Claim 1, wherein the interface member includes an upper extension piece (234) and a lower extension piece (236) that each extend radially outward from the endcap, the upper extension piece and the lower extension piece together defining a groove (238) that is sized to receive the sealing member therein.

9. The liquid filter cartridge of Claim 1, wherein the endcap includes a pair of coupling members (223) that are structured to mechanically connect the endcap to a shell housing (400).

10. The liquid filter cartridge of Claim 9, wherein each of the pair of coupling members is an extension piece that extends radially outward from an outer perimeter of the endcap.

11. A liquid filtration system (100), comprising:
a filter head (300) comprising a skirt (312), the skirt having a ramp (316) disposed at a first end (318) of the skirt;
a shell housing (400) coupled to the filter head; and
the filter cartridge of claim 1 disposed within the shell housing, the sealing member sealingly engaged with the skirt.

12. The liquid filtration system of claim 11, wherein the skirt includes a plurality of seal disruptors (320) disposed proximate a second end (322) of the skirt, and wherein the ramp is formed in a helical shape that extends parallel to a central axis (310) of the filter head; or wherein,
the skirt defines a cylindrically-shaped recessed area (314) that is sized to receive the interface member therein.

13. The liquid filtration system of claim 11, wherein the skirt comprises a first inner surface (332) and a second inner surface (334), wherein an inner diameter (337) of the second inner surface is less than an inner diameter (338) of the first inner surface, and wherein a transition (336) between the first inner surface and the second inner surface is oriented parallel to the sealing member.

## Patentansprüche

1. Flüssigkeitsfilterpatrone (200), umfassend:
ein Filtermedienpaket (202); und
eine Endkappe (216), die mit einem ersten Ende (212) des Filtermedienpakets gekoppelt ist, wobei die Endkappe ein Schnittstellenelement (220) umfasst, das sich von einer oberen Oberfläche (242) der Endkappe erstreckt, wobei das Schnittstellenelement ein Dichtungselement (230) umfasst, das zumindest teilweise in einem schrägen Winkel (232) in Bezug auf eine Mittelachse (210) des Filtermedienpakets geneigt ist, wobei ein erster Abschnitt des Dichtungselements in einem ersten Winkel (864) geneigt ist und ein zweiter Abschnitt des Dichtungselements in einem zweiten Winkel (870) geneigt ist, der sich vom ersten Winkel unterscheidet.

2. Flüssigkeitsfilterpatrone nach Anspruch 1, wobei die Endkappe ein Verdrehsicherungselement (244) einschließt, das mit dem Schnittstellenelement in Eingriff steht und sich radial von dem Schnittstellenelement weg erstreckt.

3. Flüssigkeitsfiltrationssystem nach Anspruch 2, wobei das Verdrehsicherungselement eine rechteckig geformte Lasche (246) ist, die sich vom Schnittstellenelement radial nach außen und von der oberen Oberfläche nach oben in einer im Wesentlichen senkrechten Ausrichtung relativ zur oberen Oberfläche erstreckt.

4. Flüssigkeitsfilterpatrone nach Anspruch 1, wobei das Schnittstellenelement eine Öffnung (1421) einschließt, die sich radial dort hindurch erstreckt.

5. Flüssigkeitsfilterpatrone nach Anspruch 4, wobei das Schnittstellenelement ein oberes Dichtungselement (1430) und ein unteres Dichtungselement (1431) einschließt, die vertikal voneinander beabstandet sind, und wobei das Schnittstellenelement weiter eine Trennwand (1427) einschließt, die zwei Durchgänge (1423, 1425) durch das Schnittstellenelement definiert.

6. Flüssigkeitsfilterpatrone nach Anspruch 4, wobei das Schnittstellenelement ein oberes Dichtungselement (1430) und ein unteres Dichtungselement (1431) einschließt, die vertikal voneinander beabstandet sind, wobei die Öffnung eine erste Öffnung (1521) ist und wobei das Schnittstellenelement einen ersten Durchgang (1523), der sich durch eine obere Oberfläche des Schnittstellenelements erstreckt, einen zweiten Durchgang (1525), der sich durch die erste Öffnung erstreckt, und einen dritten Durchgang (1527) definiert, der sich durch eine zweite Öffnung (1529) auf einer entgegengesetzten Seite des Schnittstellenelements wie die erste Öffnung erstreckt.

7. Flüssigkeitsfilterpatrone nach Anspruch 1, wobei das Schnittstellenelement einen zylinderförmigen Vorsprung (1722) umfasst, wobei der zylinderförmige Vorsprung eine zentrale Öffnung (1728) definiert, die sich durch die Endkappe erstreckt.

8. Flüssigkeitsfilterpatrone nach Anspruch 1, wobei das Schnittstellenelement ein oberes Verlängerungsstück (234) und ein unteres Verlängerungsstück (236) einschließt, die sich jeweils radial nach außen von der Endkappe erstrecken, wobei das obere Verlängerungsstück und das untere Verlängerungsstück zusammen eine Nut (238) definieren, die zur Aufnahme des Dichtungselements darin bemessen ist.

9. Flüssigkeitsfilterpatrone nach Anspruch 1, wobei die Endkappe ein Paar von Kupplungselementen (223) einschließt, die dafür strukturiert sind, die Endkappe mechanisch mit einem Mantelgehäuse (400) zu verbinden.

10. Flüssigkeitsfilterpatrone nach Anspruch 9, wobei das Paar von Kupplungselementen ein Verlängerungsstück ist, das sich radial nach außen von einem äußeren Umfang der Endkappe erstreckt.

11. Flüssigkeitsfiltrationssystem (100), umfassend:
einen Filterkopf (300), der eine Schürze (312) umfasst, wobei die Schürze eine Rampe (316) aufweist, die an einem ersten Ende (318) der Schürze angeordnet ist;
ein Mantelgehäuse (400), das mit dem Filterkopf gekoppelt ist; und
die Filterpatrone nach Anspruch 1, die innerhalb des Mantelgehäuses angeordnet ist, wobei das Dichtungselement dichtend mit der Schürze in Eingriff steht.

12. Flüssigkeitsfiltrationssystem nach Anspruch 11, wobei die Schürze eine Vielzahl von Dichtungsdisruptoren (320) einschließt, die nahe einem zweiten Ende (322) der Schürze angeordnet sind, und wobei die Rampe in einer Spiralform ausgebildet ist, die sich parallel zu einer Mittelachse (310) des Filterkopfes erstreckt; oder wobei
die Schürze einen zylinderförmigen, vertieften Bereich (314) definiert, der zur Aufnahme des Schnittstellenelements darin bemessen ist.

13. Flüssigkeitsfiltrationssystem nach Anspruch 11, wobei die Schürze eine erste innere Oberfläche (332) und eine zweite innere Oberfläche (334) umfasst, wobei ein Innendurchmesser (337) der zweiten inneren Oberfläche kleiner ist als ein Innendurchmesser (338) der ersten inneren Oberfläche und wobei ein Übergang (336) zwischen der ersten inneren Oberfläche und der zweiten inneren Oberfläche parallel zum Dichtungselement ausgerichtet ist.

## Revendications

1. Cartouche filtrante de liquide (200), comprenant :
un bloc de support filtrant (202) ; et
un embout (216) accouplé à une première extrémité (212) du bloc de support filtrant, l'embout comprenant un élément d'interface (220) s'étendant à partir d'une surface supérieure (242) de l'embout, l'élément d'interface comprenant un élément d'étanchéité (230) qui est au moins partiellement incliné à un angle oblique (232) par rapport à un axe central (210) du bloc de support filtrant, une première partie de l'élément d'étanchéité est inclinée à un premier angle (864) et une seconde partie de l'élément d'étanchéité est inclinée à un second angle (870) qui est différent du premier angle.

2. Cartouche filtrante de liquide selon la revendication 1, dans laquelle l'embout inclut un élément anti-rotation (244) se mettant en prise avec l'élément d'interface et s'étendant radialement depuis l'élément d'interface.

3. Système de filtration de liquide selon la revendication 2, dans lequel l'élément anti-rotation est une languette de forme rectangulaire (246) s'étendant radialement vers l'extérieur à partir de l'élément d'interface et vers le haut à partir de la surface supérieure dans une orientation sensiblement perpendiculaire par rapport à la surface supérieure.

4. Cartouche filtrante de liquide selon la revendication 1, dans laquelle l'élément d'interface inclut une ouverture (1421) s'étendant radialement à travers celui-ci.

5. Cartouche filtrante de liquide selon la revendication 4, dans laquelle l'élément d'interface inclut un élément d'étanchéité supérieur (1430) et un élément d'étanchéité inférieur (1431) espacés verticalement l'un de l'autre et dans laquelle l'élément d'interface inclut en outre une séparation (1427) définissant deux passages (1423, 1425) à travers l'élément d'interface.

6. Cartouche filtrante de liquide selon la revendication 4, dans laquelle l'élément d'interface inclut un élément d'étanchéité supérieur (1430) et un élément d'étanchéité inférieur (1431) espacés verticalement l'un de l'autre, dans laquelle l'ouverture est une première ouverture (1521), et dans laquelle l'élément d'interface définit un premier passage (1523) s'étendant à travers une surface supérieure de l'élément d'interface, un deuxième passage (1525) s'étendant à travers la première ouverture, et un troisième passage (1527) s'étendant à travers une deuxième ouverture (1529) sur un côté opposé de l'élément d'interface comme la première ouverture.

7. Système de filtration de liquide selon la revendication 1, dans lequel l'élément d'interface comprend une protubérance de forme cylindrique (1722), la protubérance de forme cylindrique définissant une ouverture centrale (1728) qui s'étend à travers l'embout.

8. Cartouche filtrante de liquide selon la revendication 1, dans laquelle l'élément d'interface inclut une pièce d'extension supérieure (234) et une pièce d'extension inférieure (236), qui s'étendent chacune radialement vers l'extérieur depuis l'embout, la pièce d'extension supérieure et la pièce d'extension inférieure définissant ensemble une nervure (238) qui est dimensionnée de façon à recevoir à l'intérieur l'élément d'étanchéité.

9. Cartouche filtrante de liquide selon la revendication 1, dans laquelle l'embout inclut une paire d'éléments de couplage (223) qui sont structurés de façon à connecter mécaniquement l'embout à un boîtier de coque (400).

10. Cartouche filtrante de liquide selon la revendication 9, dans laquelle chacun de la paire d'éléments de couplage est une pièce d'extension qui s'étend radialement vers l'extérieur d'un périmètre extérieur de l'embout.

11. Système de filtration de liquide (100), comprenant :
une tête de filtre (300) comprenant une jupe (312), la jupe présentant une rampe (316) disposée à une première extrémité (318) de la jupe ;
un boîtier de coque (400) accouplé à la tête de filtre ; et
la cartouche filtrante selon la revendication 1 disposée dans le boîtier de coque, l'élément d'étanchéité étant mis en prise étanche avec la jupe.

12. Système de filtration de liquide selon la revendication 11, dans lequel la jupe inclut une pluralité d'éléments d'interruption d'étanchéité (320) disposés à proximité d'une seconde extrémité (322) de la jupe, et dans lequel la rampe présente une forme hélicoïdale qui s'étend parallèlement à un axe central (310) de la tête de filtre ; ou dans lequel
la jupe définit une zone évidée de forme cylindrique (314) qui est dimensionnée pour recevoir l'élément d'interface dans celle-ci.

13. Système de filtration de liquide selon la revendication 11, dans lequel la jupe comprend une première surface intérieure (332) et une seconde surface intérieure (334), dans lequel un diamètre intérieur (337) de la seconde surface intérieure est inférieur à un diamètre intérieur (338) de la première surface intérieure, et dans lequel une transition (336) entre la première surface intérieure et la seconde surface intérieure est orientée parallèlement à l'élément d'étanchéité.
